# EUROPEAN PATENT APPLICATION

(11) **EP 1 728 618 A1**
(43) Date of publication of application: **06.12.2006**
(21) Application number: 05010974.3
(22) Date of filing: 20.05.2005
(51) Int. Cl.: B29C 67/20, C04B 38/00, H01M 4/92, B01J 23/42, B01J 35/10

(54) **Methods of making platinum and platinum alloy catalysts with nanonetwork structures**

(71) Applicant: Institute of Nuclear Energy Research, Long Tan Taoyuan Hsien (TW)
(72) Inventor: Chien, Chun-Chin, c/o Inst. of Nuclear Energy Res., Longtan Township, Taoyuan County 32546 (TW); Jeng, King-Tsai, c/o Inst. Nuclear Energy Res, Longtan Township, Taoyuan County 32546 (TW); Chiou, Shean-Du, c/o Inst. of Nuclear Energy Res., Longtan Township, Taoyuan County 32546 (TW); Lin, Su-Hsine, c/o Inst. of Nuclear Energy Res., Longtan Township, Taoyuan County 32546 (TW)
(74) Representative: Hager, Thomas Johannes

(57) **Abstract**

This invention relates to the preparations of noble metal catalysts, i.e., platinum and platinum alloys, on suitable supports with nanonetwork structures and high catalytic efficiencies. A compact structure of a monolayer or a few layers is formed by self-assembly of organic polymer, e.g., polystyrene (PS), nanospheres or inorganic, i.e., silicon dioxide (SiO₂), nanospheres on a support surface. In the void spaces of such a compact arrangement, catalyst is formed by filling with catalyst metal ion-containing aqueous solution and reduced by chemical reduction, or formed by vacuum sputtering. When using organic polymer nanospheres as the starting or structure-directing material, the polymer particles are removed by thermal decomposition at a high temperature and the catalyst having a nanonetwork structure is obtained. In the case of using silicon dioxide nanospheres as the starting material, silicon dioxide particles are dissolved with hydrofluoric acid solution and evaporated away leading to formation of a similar nanonetwork structure made of catalyst. The catalysts prepared by these methods possess characteristics of robust in structure, uniform in hole size and high in catalytic surface area. Their main applications include uses as catalysts in direct methanol and proton exchange membrane fuel cells, as well as in chemical reactors, fuel reformers, catalytic converters, etc.

## Description

### FIELD OF THE INVENTION

This invention provides methods to the preparations of platinum and platinum alloy-based catalysts having nanonetwork structures on appropriate supports, e.g., carbon paper, glass carbon, graphite, ceramics, glass, metals, etc., having relatively smooth surfaces. More specifically, the invention relates to the use of nano-sized organic polymer, e.g., polystyrene (PS), poly(methyl methacrylate) (PMMA) or inorganic, e.g., silicon dioxide (SiO₂), nanospheres to form closely packed, layered structure by means of self-assembly. In general, a monolayer or a few layers of well-defined, face-centered cube lattices are desirable. Such formed compact, layered structure is heat-dried to remove solvents, in which the polystyrene or silicon dioxide nanospheres are originally dispersed, resulting a compact, robust, three-dimensional nano network with some void spaces. Then, in the void spaces of such a compact arrangement, catalyst metal ions in aqueous solution are filled and reduced chemically or catalyst metals are sputtering filled. When using polystyrene nanospheres as the starting material, the polymer particles are removed at a high temperature and the catalyst having a nanonetwork structure is obtained. In the case of using silicon oxide nanospheres as the starting material, silicon oxide particles are dissolved with hydrofluoric acid solution and evaporated away leading to formation of a similar nanonetwork structure made of catalyst. The prepared catalysts have characteristics of three-dimensional (3-D) nano network with rigid structure, uniform hole-size and high surface area.

### BACKGROUND OF THE INVENTION

Catalysts play key roles in most of the important chemical reactions, including syntheses of organic compounds, reforming production of hydrogen from methanol, natural gas and gasoline, catalytic conversion of carbon monoxide, nitrogen oxides and unburned fuels, etc. In particular, platinum and platinum alloys are indispensable catalysts for direct methanol and proton exchange membrane fuel cells with respect to electro-reduction of oxygen and electro-oxidation of fuel. So far, most of the catalysts are prepared using suitable supports, such as carbon blacks, ceramics and silica gels. The so-called nanocatalysts are those having particles prepared in nano-sizes, generally a few nanometers.

In preparing catalysts for DMFC and PEMFC applications, high surface area carbon supports, such as Cabot Vulcan XC-72 and Chevron Shawinigan, are commonly used. Typical examples of state-of-the-art for making carbon black-supported platinum and platinum alloy catalysts are given by Cooper et al. U.S. Pat. 5,316,990, Brand et al. U.S. Pat. 5,489,563, Gunner et al. U.S. Pat. 5,939,220 and Auer et al. U.S. Pat. 6,007,934. In general, catalyst metal in ions or colloidal sols are adsorbed to carbon support surfaces and reduced by chemical reactions. High temperature reduction using hydrogen gas is also commonly used. However, such prepared nanocatalysts suffer from drawbacks of re-construction, re-crystallization and sintering when in use to form larger particles and substantially lose their catalytic surfaces. These give rise to significantly lower catalytic efficiencies and shorter service lives. Novel approaches are needed to prepare and stabilize catalysts under all application conditions.

Due to the advancement of nanotechnologies, nanostructures can be readily fabricated. In one example, Billliet et al., U.S. Pat. No. 6,709,622 illustrates a method to fabricate nanostructures containing isotropically distributed, interconnected pores having cross-sectional diameters in the nanometer and Angstrom ranges. Briefly, inorganic nanoparticles are used as a precursor and mixed with organic polymer to form a homogeneous thermoplastics compound. The organic polymer is then removed by sintering at a high temperature and a nanostructure is formed. In another example shown by Jin, U.S. Pat. No. 6,858,521, a spaced-apart array of nanostructures is fabricated by providing a show mask having a plurality of spaced apart, relatively large apertures, reducing the size of the aperture to nanoscale dimensions, and depositing a material through the mask to form a plurality of spaced-apart nanostructures. However, in general these nanostructures are suitable for used as catalyst supports only rather than as catalysts. It would be very beneficial if a catalyst itself can be fabricated into a nanostructure with excellent resistances to recombination, recrystallization and sintering wile providing high surface area and high catalytic efficiency.

In fact, using some nanomaterials, e.g., polystyrene nanospheres and silicon dioxide nanospheres, as structure-directing agents do provide a new approach to achieve this goal. These nanospheres readily form closely packed, layered structures of one to several layers on a smooth support surface when applied at diluted conditions. With these unique characteristics of such nanomaterials, this invention is able to prepare novel catalysts with nanonetwork structures on suitable supports that are totally different from those of the conventional nano catalysts. The advantages are to overcome the drawbacks encountered by conventional nanocatalysts. In addition, the platinum and platinum alloys catalysts prepared by the invented methods will significantly improve the performances of DMFCs and PEMFCs due to robust structure, resistant to recombination, and high catalytic surfaces.

### SUMMARY OF THE INVENTION

The present invention includes methods to prepare or produce platinum and platinum alloy-based catalysts having nanonetwork structures on supports. Polystyrene nanospheres or silicon dioxide nanospheres are used as the starting or structure-directing material to form a perfectly arranged, layered structure through a self-assembly process on a support. The catalyst is then formed and filled in the void spaces of the layered structure by chemical reduction or vacuum sputtering. Removing the starting material by means of thermal decomposition or chemical dissolution, a catalyst with nanonetwork structure is obtained.

### BRIEF DESCRIPTION OF THE DRAWINGS

The accompanying drawings serve to explain the principles of the invention and illustrate the embodiments of the present invention. In the drawings:
FIG. 1 is a pictorial illustration of a platinum catalyst with nanonetwork structure prepared according to an exemplary embodiment (EXAMPLE 2) of the present invention. The staring material is SiO₂ nanospheres and the support is carbon paper.
FIG. 2 is a pictorial illustration of a platinum catalyst with nanonetwork structure prepared according to an exemplary embodiment (EXAMPLE 4) of the present invention. The staring material is PS nanospheres and the support is glass.
FIG. 3 is a pictorial illustration of a platinum-ruthenium alloy catalyst with nanonetwork structure prepared according to an exemplary embodiment (EXAMPLE 4) of the present invention. The staring material is PS nanospheres and the support is glass.

### DETAILED DESCRIPTION

Self-assembly is one of the simplest ways to fabricate layered structures and, in particular, to form nano-sized structures. This process involves the interactions of several forces including van der Waals forces. Several organic polymers and inorganic materials now can be prepared into nanospheres and are commercially available. These nanomaterials can be used to form closely-packed, layered structures of one or several layers on suitable supports. For example, polystyrene nanospheres are first diluted in approximate solvents containing organics and water and applied to a smooth glass support, and then solvents are removed by evaporation. A compact, well-defined layer structure is readily formed. In addition, the void spaces of such a layered structure can be further filled with TiO₂ nanospheres of smaller sizes. When the solvents are dried away and polystyrene nanospheres are burned and completely removed, a new nanonetwork structure made of TiO₂ nanoparticles is formed. Such a nanonetwork structure provides a large void space and high surface areas. Obviously, if catalysts can be prepared into similar nanonetwork structures, they are expected to exhibit high catalyst stabilities and catalytic efficiencies.

Inspired by this finding, novel methods to prepare platinum and platinum alloy-based catalysts having nanonetwork structures are developed. Thus, this invention relates to the use of nano-sized polymer, such as, polystyrene, or inorganic, such as, silicon dioxide, spheres in dilute solutions (e.g., 0.1 wt%) to form closely packed, layered structure by means of self-assembly. Appropriate supports include carbon paper, glass carbon, graphite, ceramics, glass, metals etc., having relatively smooth surfaces. In general, a monolayer or multilayer of well defined, face-centered cube (f.c.c.) lattice is formed by dispersing dilute solution of nanosphere to the support surface. The self-assembly formed compact, layered structure is heat-dried to remove solvents, in which the polystyrene or silicon spheric particles in nano-sizes are originally dispersed, resulting in a well-defined, three-dimensional nano network with some void spaces. Then, in the void spaces of such a compact arrangement, catalyst metal ions in aqueous solution are filled and reduced chemically or catalyst metals are filled. Suitable catalyst materials include platinum (Pt) and alloys of platinum with ruthenium (Ru), iridium (Ir), palladium (Pd), rhodium (Rh), and osmium (Os). When using polystyrene nanospheres as the starting material, the polymer nanoparticles are removed at a high temperature (<400 °C) and the catalyst having nanonetwork structure is obtained. In the case of using SiO₂ nanospheres as the starting material, SiO₂ nanoparticles are dissolved with hydrofluoric acid (HF) aqueous solution and slightly heated (<100 °C) to evaporate away leading to formation of similar nanonetwork structure. The prepared nanonetwork catalysts show robust structure, uniform hole-size, spacious voids and high catalytic surface areas. The loading of catalyst can be much lower than that obtained using carbon black powder as a support (e.g., < 0.1 mgPt/cm²). These platinum and platinum alloy-based catalysts with nano network structures can be applied to direct methanol fuel cells (DMFCs) and proton exchange membrane fuel cells (PEMFCs) as well as chemical reactors, fuel reformers, and catalytic converters.

### EXAMPLE 1

Method for making Pt and platinum alloy catalysts with nanonetwork structure using SiO₂ nanospheres as the starting material and reduced with hydrogen gas in an oven.

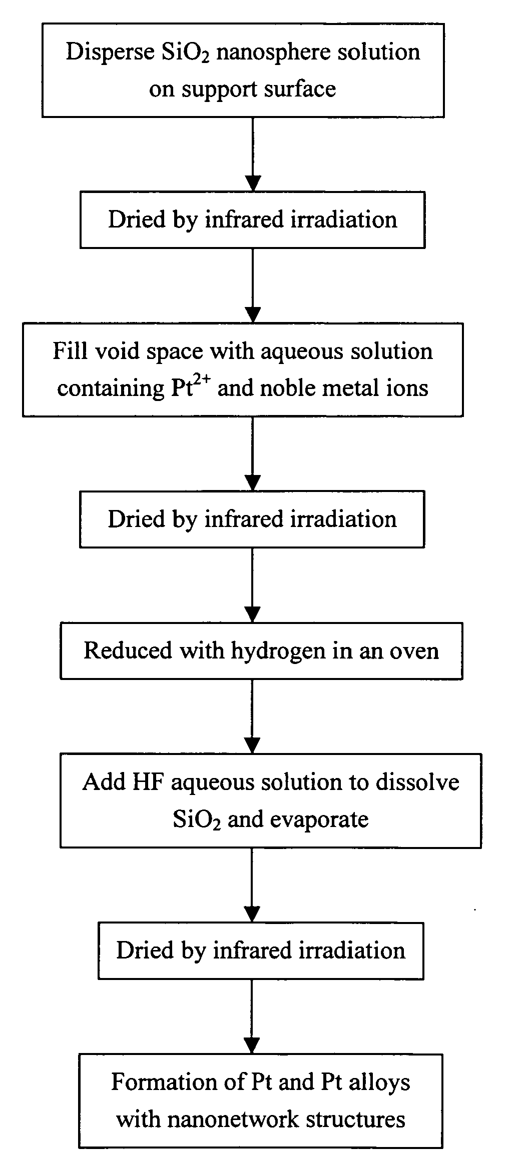

### EXAMPLE 2

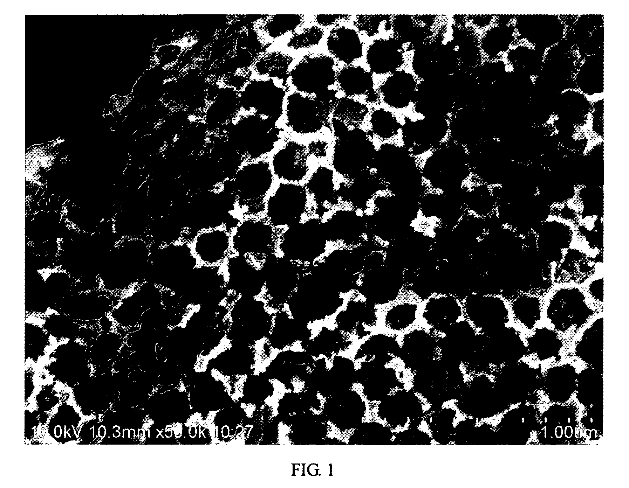

Method for making Pt and platinum alloy catalysts with nanonetwork structure using SiO₂ nanospheres as the starting material and chemically reduced using chemical reducing agents, e.g., hydrazine, formaldehyde, formic acid, sodium sulfite, and sodium borohydride, etc. The resultant Pt catalyst with nanonetwork structure is shown in FIG. 1.

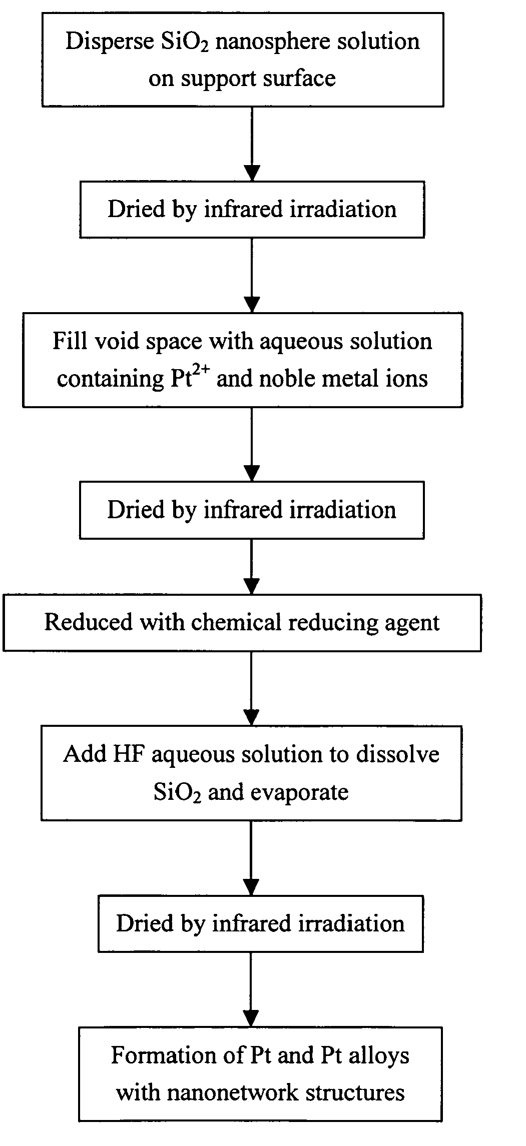

### EXAMPLE 3

Method for making Pt and platinum alloy catalysts with nanonetwork structure using SiO₂ nanospheres as the starting material and fill catalyst by vacuum sputtering.

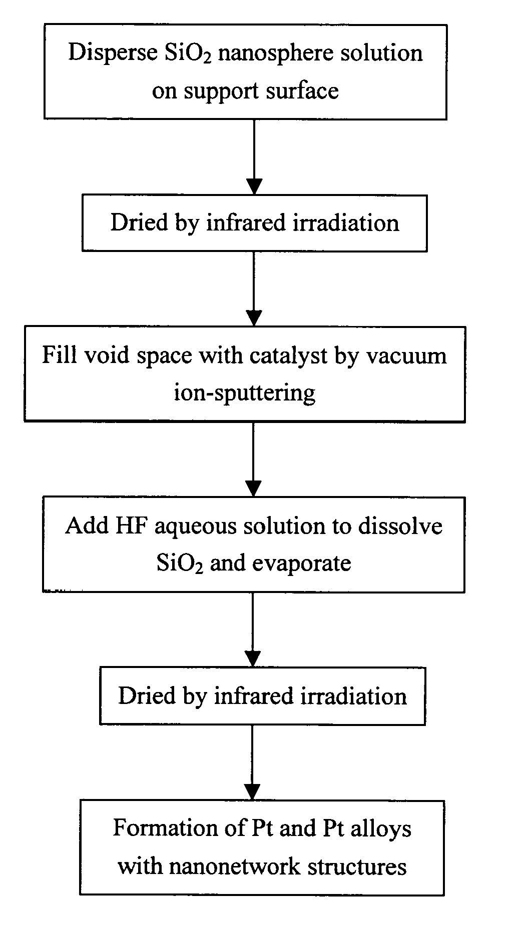

### EXAMPLE 4

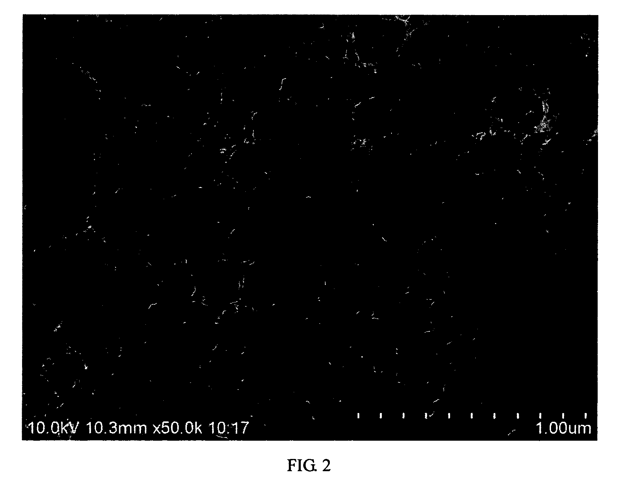

Method for making Pt and platinum alloy catalysts with nanonetwork structure using organic polymer nanospheres as the starting material and chemically reduced using hydrogen gas. The resultant Pt catalyst with nanonetwork structure is shown in FIG. 2.

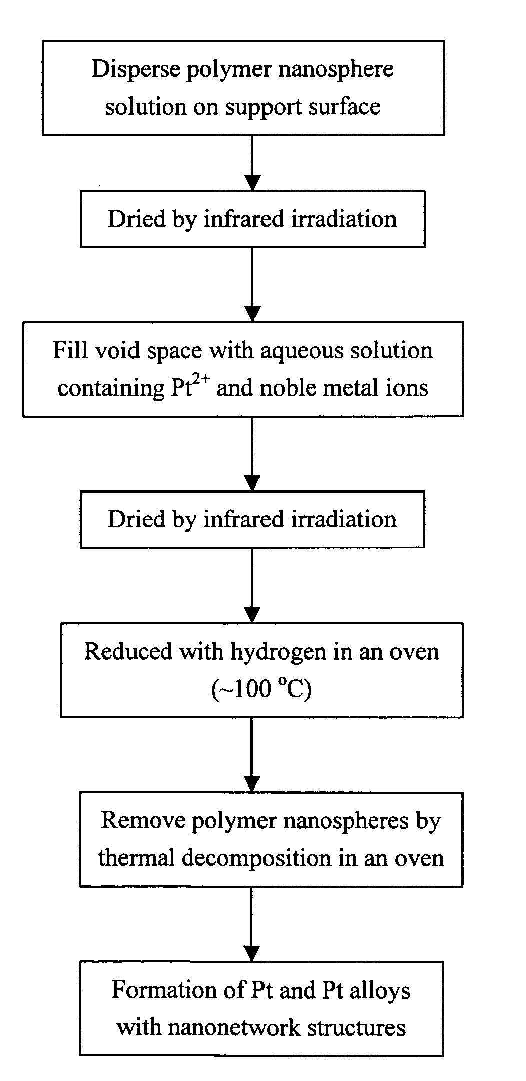

### EXAMPLE 5

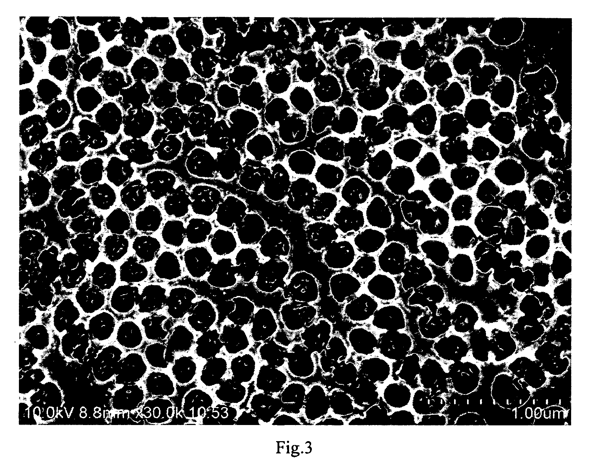

Method for making Pt and platinum alloy catalysts with nanonetwork structure using organic polymer nanospheres as the starting material and chemically reduced using chemical reducing agents, e.g., hydrazine, formaldehyde, formic acid, sodium sulfite, and sodium borohydride, etc. The resultant Pt-Ru alloy catalyst with nanonetwork structure is shown in FIG. 3.

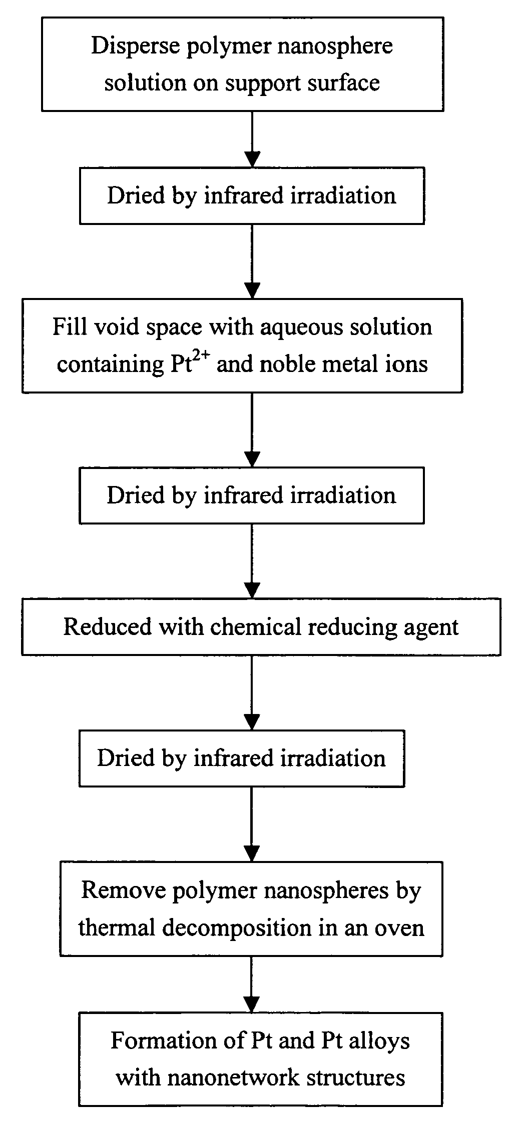

### EXAMPLE 6

Method for making Pt and platinum alloy catalysts with nanonetwork structure using organic polymer nanospheres as the as the starting material and fill catalyst by vacuum sputtering.

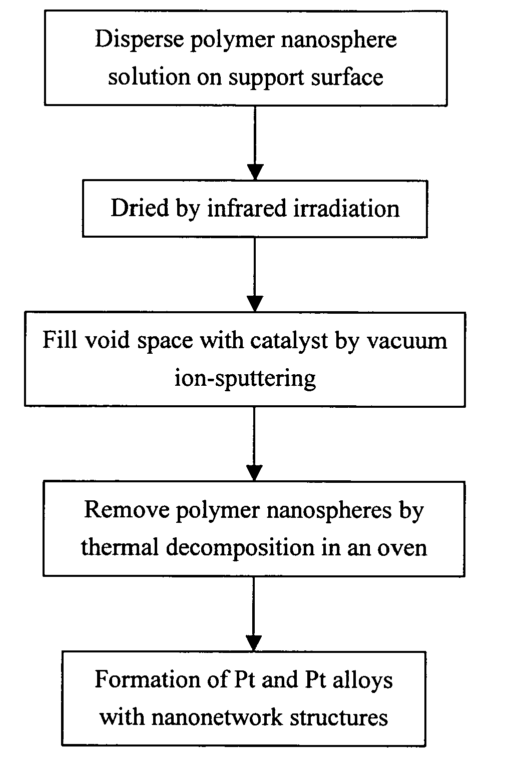

### References Cited

U.S. Patent Documents
5,316,990 May 1994 Cooper et al.
5,489,563 Feb., 1996 Brand et al.
5,939,220 Aug., 1999 Gunner et al.
6,007,934 Dec., 1999 Auer et al.
6,709,622 Mar., 2004 Billiet et al.
6,858,521 Feb., 2005 Jin

## Claims

1. A method to prepare platinum and platinum alloy catalysts on supports with nanonetwork structures comprising steps:
nanospheres of starting or structure-directing material are first dispersed on a support surface forming a compact, layered structure of a monolayer or a few layers through a self-assembly process, wherein the starting or structure-directing material is organic polymer nanospheres or inorganic oxide nanospheres;
the platinum or platinum alloy catalyst is then formed and filled in the void spaces of the layered structure by chemical reduction from an aqueous solution containing metal ions or by vacuum ion-sputtering, and
the starting material is then removed by means of thermal decomposition or chemical dissolution and platinum or platinum alloy catalyst with a nanonetwork structure and high catalytic efficiency is obtained.

2. The methods of claim 1, wherein the platinum and platinum alloy catalysts with nanonetwork structures are for uses in direct methanol fuels cells (DMFCs).

3. The methods of claim 1, wherein the platinum and platinum alloy catalysts with nanonetwork structures are for uses in proton exchange membrane fuels cells (PEMFCs).

4. The methods of claim 1, wherein the platinum and platinum alloy catalysts with nanonetwork structures are for uses in catalytic converters for automotive vehicles.

5. The methods of claim 1, wherein the platinum and platinum alloy catalysts with nanonetwork structures are for uses in gaseous reactions of hydrogenation and dehydrogenation, and for hydrogen production through reforming of methanol, natural gas, gasoline and other hydrogen-containing fuels.

6. The methods of claim 1, wherein the polymer nanospheres include polystyrene nanospheres and poly (methyl methacrylate) (PMMA) nanospheres having diameters ranging from 50 nanometers to several micrometers.

7. The methods of claim 1, wherein the inorganic oxide nano spheres include silicon dioxide (SiO₂) nanospheres having diameters ranging from 50 nanometers to several micrometers.

8. The methods of claim 1, wherein the platinum and platinum alloy catalysts with nanonetwork structures can be monolayer or multilayer.

9. The methods of claim 1, wherein metals filled in the void spaces of the layered structure include platinum (Pt) and mixtures of platinum with ruthenium (Ru), iridium (Ir), palladium (Pd), rhodium (Rh), and osmium (Os).

10. The methods of claim 8, wherein metal ions filled in the void spaces of the layered structure include platinum ion and mixtures of platinum ion with one ion or several ions of ruthenium, iridium, palladium, rhodium and osmium.

11. The methods of claim 10, wherein metal ions filled in the void spaces of the layered structure can be dried using infrared irradiation or other heating methods, followed by hydrogen reduction at high temperatures (< 300 °C).

12. The methods of claim 10, wherein metal ions filled in the void spaces of the layered structure can be dried using infrared irradiation or other heating methods, followed by adding reducing agents including hydrazine (N₂H₄), formaldehyde, formic acid, sodium sulfite, sodium borohydride (NaBH₄).

13. The methods of claim 9, wherein metals filled in the void spaces of the layered structure can be achieved by vacuum spray and ion-sputtering methods.

14. The methods of claim 1, wherein the organic polymer nanospheres used for the preparation of platinum and platinum alloy catalysts with nanonetwork structures can be removed by heating (<400 °C) with high temperature ovens and air-blowing oxidation ovens.

15. The methods of claim 1, wherein the silicon dioxide nanospheres used for the preparation of platinum and platinum alloy catalysts with nanonetwork structures can be removed by adding hydrofluoric acid aqueous solution followed by slightly heating (<100 °C).

## Amended claims

### Amended claims in accordance with Rule 86(2) EPC.

**1.** A method to prepare platinum and platinum alloy catalysts on supports with nanonetwork structures comprising steps:
a. nanospheres of starting or structure-directing material are first dispersed on a support surface forming a compact, layered structure of 1-10 layers through a self-assembly process, wherein the starting or structure-directing material is organic polymer nanospheres or inorganic oxide nanospheres;
b. the platinum or platinum alloy catalyst is then formed and filled in the void spaces of the layered structure by chemical reduction from an aqueous solution containing metal ions or by vacuum ion-sputtering, and
c. the starting material is then removed by means of thermal decomposition or chemical dissolution and platinum or platinum alloy catalyst with a nanonetwork structure and high catalytic efficiency is obtained.

**2.** The methods of claim 1, wherein the platinum and platinum alloy catalysts with nanonetwork structures are frames or interconnects of the nanonetworks with the frame thickness <1000 nm, preferably <100nm, may be used for direct methanol fuels cells (DMFCs) with improved performances and lower catalyst costs.

**3.** The methods of claim 1, wherein the platinum and platinum alloy catalysts with nanonetwork structures are for uses in proton exchange membrane fuels cells (PEMFCs) with improved performances and lower catalyst costs.

**4.** The methods of claim 1, wherein the platinum and platinum alloy catalysts with nanonetwork structures are for uses in catalytic converters for automotive vehicles with improved performances and lower catalyst costs.

**5.** The methods of claim 1, wherein the platinum and platinum alloy catalysts with nanonetwork structures are for uses in gaseous reactions of hydrogenation and dehydrogenation, and for hydrogen production through reforming of methanol, natural gas, gasoline and other hydrogen-containing fuels with improved performances and lower catalyst costs.

**6.** The methods of claim 1, wherein the polymer nanospheres include polystyrene nanospheres and poly (methyl methacrylate) (PMMA) nanospheres having diameters ranging from 50 nanometers to 2000 nanometers, preferably 50-200 nm.

**7.** The methods of claim 1, wherein the inorganic oxide nano spheres include silicon dioxide (SiO₂) nanospheres having diameters ranging from 50 nanometers to 2000 nanometers, preferably 50-200 nm.

**8.** The methods of claim 1, wherein the platinum and platinum alloy catalysts with nanonetwork structures can be 1-10 layers, preferably 2-5 layers.

**9.** Th e methods of claim 1, wherein metals filled in the void spaces of the layered structure include platinum (Pt) and mixtures of platinum with ruthenium (Ru), iridium (Ir), palladium (Pd), rhodium (Rh), and osmium (Os).

**10.** The methods of claim 8, wherein metal ions filled in the void spaces of the layered structure include platinum ion and mixtures of platinum ion with one ion or several ions of ruthenium, iridium, palladium, rhodium and osmium.

**11.** The methods of claim 10, wherein metal ions filled in the void spaces of the layered structure can be dried using infrared irradiation or other heating methods, followed by hydrogen reduction at high temperatures (< 300°C).

**12.** The methods of claim 10, wherein metal ions filled in the void spaces of the layered structure can be dried using infrared irradiation or other heating methods, followed by adding reducing agents including hydrazine (N₂H₄), formaldehyde, formic acid, sodium sulfite, sodium borohydride (NaBH₄).

**13.** The methods of claim 9, wherein metals filled in the void spaces of the layered structure can be achieved by vacuum spray and ion-sputtering methods.

**14.** The methods of claim 1, wherein the organic polymer nanospheres used for the preparation of platinum and platinum alloy catalysts with nanonetwork structures can be removed by heating (<400°C) with high temperature ovens and air-blowing oxidation ovens.

**15.** The methods of claim 1, wherein the silicon dioxide nanospheres used for the preparation of platinum and platinum alloy catalysts with nanonetwork structures can be removed by adding hydrofluoric acid aqueous solution followed by slightly heating (<100°C).
